# EUROPÄISCHE PATENTSCHRIFT

(11) **EP 0 886 446 B1**
(45) Veröffentlichungstag und Bekanntmachung des Hinweises auf die Patenterteilung: **25.08.2004**
(21) Anmeldenummer: 98110584.4
(22) Anmeldetag: 09.06.1998
(51) Int. Cl.: H04Q 3/00

(54) **Verfahren und Kommunikationssystem zur Echtzeit-Aktualisierung von Diensteinformationen für Dienste eines Intelligenten Netzes**
Method and communication system for real-time updating of intelligent network service information
Procédé et système de communication pour la mise à jour de l'information de service d'un réseau intelligent en temps réel

(30) Priorität: 18.06.1997 DE 19725867
(43) Veröffentlichungstag der Anmeldung: 23.12.1998
(73) Patentinhaber: SIEMENS AKTIENGESELLSCHAFT, 80333 München (DE)
(72) Erfinder: Kreppel, Jan, 82377 Penzberg (DE)

(56) Entgegenhaltungen:
- WO-A-95/26114
- US-A- 5 592 541

## Beschreibung

Die Erfindung betrifft ein Verfahren und ein Kommunikationssystem zur Echtzeit-Aktualisierung von Diensteinformationen für Dienste eines Intelligenten Netzes, das zumindest eine Dienstesteuerungsstelle und eine Dienstevermittlungsstelle sowie zumindest eine Schnittstelle zur Kommunikation mit einer externen Einrichtung aufweist.

Es ist allgemein bekannt, daß Kommunikationssysteme, die die Struktur eines Intelligenten Netzes (IN, Intelligent Network) unterstützen, dem Betreiber des Kommunikationssystems die Einführung neuer Dienste, die Erweiterung bestehender Dienste und insgesamt die Nutzung der IN-Dienste durch die Teilnehmer des Kommunikationssystems erleichtern. Das IN-Prinzip beruht im wesentlichen auf dem Steuern und Durchführen von Vermittlungs- und Dienstefunktionen in Dienstevermittlungsstellen (Service Switching Points) und Dienstesteuerungsstellen (Service Control Points). Unterstützt werden die Dienstevermittlungsstellen und Dienstesteuerungsstellen durch ein Diensteverwaltungssystem (Service Management System), das Diensteverwaltungsfunktionen zum Administrieren der Daten für die Erzeugung, Einführung und Nutzung der IN-Dienste wahrnimmt. Die Dienstesteuerungsstelle bildet dabei einen zentralen Netzknoten, der die zur Steuerung der IN-Dienste erforderlichen Daten und Logik aufweist. Die Dienstevermittlungsstelle bildet einen Netzknoten, der als Dienstezugangs- und Diensteausführungspunkt die Dienstevermittlungsfunktionen - wie beispielsweise die Ermittlung von Triggern im üblichen Vermittlungsprozess- ausführt.

Ein solches Kommunikationssystem mit den beschriebenen Komponenten kann zum Beispiel der Druckschrift WO 95/26114 entnommen werden.

Üblicherweise werden die Dienstevermittlungsstellen in einem bestimmten geographischen Bereich von einer Dienstesteuerungsstelle gesteuert. Dabei können die Netzknoten untereinander Nachrichten gemäß einem Netzprotokoll (INAP, Intelligent Network Application Part) austauschen. Ermittelt beispielsweise die Dienstevermittlungsstelle einen Trigger im Vermittlungsprozess, sendet sie eine Nachricht an die Dienstesteuerungsstelle, die jeweils die für den weiteren Verbindungsaufbau erforderlichen Maßnahmen ergreift und entsprechende Nachrichten zur jeweiligen Dienstevermittlungsstelle in der Gegenrichtung nzurücksendet. Darüber hinaus weist das Intelligente Netz mit den obigen Netzeinrichtungen eine oder mehrere Schnittstellen zur Kommunikation mit externen Einrichtungen auf, über die Nachrichten gemäß einem Schnittstellenprotokoll zu der oder den externen Einrichtungen gesendet und von ihnen empfangen werden können.

Über das bestehende INAP-Netzprotokoll gibt es keine Möglichkeit, Diensteinformationen für IN-Dienste zu setzen oder zu ändern. Für bestimmte Anwendungen, beispielsweise ein Flottenmanagement-System zur Administrierung von Fahrzeugen, ist es aber notwendig, die Diensteinformationen des IN-Dienstes in Echtzeit verändern zu können. Die Echtzeit-Aktualisierung ermöglicht beispielsweise, den genauen Aufenthaltsort der in den Fahrzeugen jeweils befindlichen Endgeräte - beispielsweise Mobilstationen - bei ankommenden oder abgehenden Anrufen zu kennen, um diese Informationen zum Routen der Kommunikationsverbindung zu verwenden. Zur Echtzeit-Aktualisierung von Diensteinformationen ist eine Informationsübertragung mit möglichst hoher Übertragungsrate zu den IN-Einrichtungen, insbesondere den Dienstesteuerungsstellen, wünschenswert. Die innerhalb des Mobil-Kommunikationssystems verfügbaren Aufenthaltsinformationen kennzeichnen bestenfalls eine Funkzelle, in der die Mobilstation sich befindet und ist daher für ein effizientes Flottenmanagement-System unter Echtzeitbedingungen zu ungenau.

Der Erfindung liegt die Aufgabe zugrunde, ein Verfahren und ein Kommunikationssystem anzugeben, durch das eine Echtzeit-Aktualisierung von Diensteinformationen für IN-Dienste ohne Zusatzprotokolle und ohne Änderung des bestehenden Netzprotokolls erzielbar ist. Insbesondere soll die Aktualisierung von Diensteinformationen in Echtzeit gemäß einem IN-Dienst für ein möglichst effizientes Flottenmanagement-System zum Administrieren von Fortbewegungsmitteln auch mit dem bestehenden INAP-Netzprotokoll erreicht werden.

Diese Aufgabe wird gemäß der Erfindung durch die Merkmale des Patentanspruchs 1 hinsichtlich des Verfahrens und durch die Merkmale des Patentanspruchs 12 hinsichtlich des Kommunikationssystems gelöst. Die Merkmale des Patentanspruchs 6 geben die für ein effizientes Flottenmanagement-System zur Administrierung von Fortbewegungsmitteln erforderlichen Merkmale an. Weiterbildungen der Erfindung sind den Unteransprüchen zu entnehmen.

Gemäß dem Gegenstand der Erfindung wird von einem externen Kontroll- und Steuersystem, das eine Änderung der Diensteinformationen in Echtzeit ermittelt, eine Diensterufnummer gewählt, die zumindest eine Dienstenummer und eine Transaktionsnummer enthält. Anhand der Dienstenummer, die den Dienst kennzeichnet, wird eine Kommunikationsverbindung zum Intelligenten Netz aufgebaut, und anhand der Transaktionsnummer eine Transaktion gekennzeichnet, die die Aktualisierung der Diensteinformationen bewirkt. Die Diensterufnummer wird in Nachrichten des Schnittstellenprotokolls, das die Kommunikation mit dem Kontroll- und Steuersystem ermöglicht, und des Netzprotokolls, das die Kommunikation im Intelligenten Netz ermöglicht, zu der Dienstesteuerungsstelle übertragen, die die empfangene Transaktionsnummer auswertet und bestehende Diensteinformationen durch neue Diensteinformationen ersetzt. Nach der Durchführung der Aktualisierungs-Transaktion durch die Dienstesteuerungsstelle wird von ihr die Kommunikationsverbindung ausgelöst und das Auslösen in Nachrichten des Netzprotokolls und des Schnittstellenprotokolls dem Kontrollund Steuersystem signalisiert.

Die Erfindung hat den Vorteil, dass von dem Kontroll- und Steuersystem, sobald eine Änderung der Diensteinformationen in Echtzeit festgestellt wird, eine Diensterufnummer mit einer Transaktionsnummer gewählt wird, die der zur Durchführung des IN-Dienstes vorgesehenen Dienstesteuerungsstelle im Intelligenten Netz signalisiert, die Diensteinformationen zu aktualisieren. Durch die Definition einer derartigen Aktualisierungs-Transaktion in einer Diensterufnummer braucht das bestehende INAP-Netzprotokoll zum Austausch von Informationen zwischen den Einrichtungen des Intelligenten Netzes und auch das Schnittstellenprotokoll an der Schnittstelle des Intelligenten Netzes zu dem externen Kontroll- und Steuersystem nicht verändert zu werden. Die Signalisierung der Transaktion zur Aktualisierung der Diensteinformationen im Intelligenten Netz erfolgt gemäß dem Gegenstand der Erfindung gänzlich ohne Zusatzprotokolle, so dass der Austausch von Signalisierungsinformationen zwischen Dienstesteuerungsstelle und externem Kontroll- und Steuersystem mit hoher Übertragungsrate durchführbar ist. Diensteinformationen können durch das erfindungsgemäße Verfahren in den IN-Einrichtungen, d. h. insbesondere in der Dienstesteuerungsstelle, unter Echtzeit-Bedingungen aktualisiert werden.

Gemäß einer vorteilhaften Weiterbildung der Erfindung wird von dem Kontroll- und Steuersystem eine erste Diensterufnummer mit einer Transaktionsnummer gewählt und zum Intelligenten Netz gesendet, durch die der Beginn mehrerer zusammenhängender Transaktionen mit wiederholter Aktualisierung der jeweils in Echtzeit zu ändernden Diensteinformationen eingeleitet und Startinformationen von der Dienstesteuerungsstelle geladen werden. Die auf diese Weise dem Intelligenten Netz signalisierte Start-Transaktion stellt einen Initialisierungsschritt dar, bei dem von der Dienstesteuerungsstelle bestimmte Initialisierungen vorab vorgenommen werden können. Eine wesentliche Maßnahme besteht in dem Setzen von Startinformationen als Diensteinformationen.

Gemäß einer anderen vorteilhaften Weiterbildung der Erfindung ist es möglich, von dem Kontroll- und Steuersystem eine Diensterufnummer mit einer Transaktionsnummer wählen und zum Intelligenten Netz senden zu lassen, durch die der Dienstesteuerungsstelle das Ende mehrerer zusammenhängender Transaktionen mit wiederholter Aktualisierung der jeweils in Echtzeit geänderten Diensteinformationen signalisiert wird. Durch die Definition einer Ende-Transaktion im Anschluß an einen zusammenhängenden Aktualisierungsvorgang können von den Einrichtungen des Intelligenten Netzes, d. h. insbesondere von Dienstesteuerungsstellen, jeweils abschließende Dienstefunktionen - wie z. B. das Sichern von Informationen, das Rücksetzen von Zählern, die zum Aktualisieren der Diensteinformationen benutzt werden, usw. - durchgeführt werden.

Gemäß einer weiteren vorteilhaften Ausgestaltung der Erfindung werden die von der Dienstesteuerungsstelle bei jeder Aktualisierung bereitgestellten neuen Diensteinformationen jeweils den Transaktionen, die durch die Transaktionsnummer identifizierbar sind, fest zugeordnet. Auf diese Weise brauchen bei den einzelnen Aktualisierungs-Transaktionen keine Nutzinformationen mitübertragen zu werden, so dass bei Erkennen einer die Aktualisierung kennzeichnenden Transaktionsnummer durch die Dienstesteuerungsstelle automatisch die Diensteinformationen auf den jüngsten Stand gebracht werden. Dabei kennt die Dienstesteuerungsstelle die feste Zuordnung von neuen Diensteinformationen zu den jeweiligen Aktualisierungs-Transaktionen.

Von besonderem Vorteil ist die Anwendung des erfindungsgemäßen Verfahrens für eine Administrierung von Fortbewegungsmitteln, beispielsweise für ein Flottenmanagement-System. Dabei werden Positionsinformationen über den Aufenthaltsort des Fortbewegungsmittels als Diensteinformationen von dem Kontroll- und Steuersystem in Echtzeit ermittelt und eine Diensterufnummer mit einer Transaktionsnummer von dem Kontroll- und Steuersystem jeweils dann gewählt, wenn das Fortbewegungsmittel einen neuen Aufenthaltsort erreicht. Durch die in der Diensterufnummer enthaltene Transaktionsnummer ist die eine Aktualisierung der Positionsinformationen bewirkende Transaktion gekennzeichnet. Von der Dienstesteuerungsstelle werden bei Empfang der Transaktionsnummer die bisherigen Positionsinformationen jeweils durch neue Positionsinformationen ersetzt, die dem neuen Aufenthaltsort fest zugeordnet sind.

Bei einem Fortbewegungsmittel, das eine aus mehreren Strekkenabschnitten bestehende Fahrtstrecke zurücklegt, wird gemäß einer Weiterbildung der Erfindung von der Dienstesteuerungsstelle eine den Beginn der Fahrt kennzeichnende erste Transaktionsnummer empfangen und daraufhin eine Startposition als Positionsinformation initialisiert. Jeweils bei Erreichen eines neuen Streckenabschnitts empfängt die Dienstesteuerungsstelle eine die Aktualisierung der Positionsinformationen kennzeichnende zweite Transaktionsnummer und ändert die Positionsinformationen.

Die Anwendung des erfindungsgemäßen Verfahrens zur Administrierung von Fortbewegungsmitteln hat gemäß einer Weiterbildung der Erfindung den besonderen Vorteil, für einen abgehenden Anruf, der von einer im Fortbewegungsmittel befindlichen Mobilstation initiiert und an eine Kontrollperson oder Kontrolleinrichtung gerichtet ist, eine Anrufverbindung zum Intelligenten Netz aufbauen zu können. Von der Dienstesteuerungsstelle werden die aktuellen Positionsinformationen ermittelt und die Zielrufnummer der abhängig vom momentanen Aufenthaltsort des Fortbewegungsmittels gerade zuständigen Kontrollperson oder Kontrolleinrichtung bereitgestellt und die Anrufverbindung entsprechend der Zielrufnummer zu der zuständigen Kontrollperson oder Kontrolleinrichtung geschaltet.

Gemäß einer vorteilhaften Ausgestaltung des erfindungsgemäßen Verfahrens wird die Anrufverbindung jeweils von der Mobilstation über die Dienstesteuerungsstelle zu einem von mehreren für verschiedene Streckenabschnitte einer Fahrtstrecke zuständigen Fahrdienstleiter abhängig vom Aufenthaltsort des Fortbewegungsmittels, erkennbar an den bereitgestellten Positionsinformationen, geschaltet.

Gemäß einer alternativen vorteilhaften Ausgestaltung des erfindungsgemäßen Verfahrens wird für einen ankommenden Anruf eine Anrufverbindung zum Intelligenten Netz aufgebaut. Von der Dienstesteuerungsstelle werden die aktuellen Positionsinformationen mehrerer Fortbewegungsmittel ermittelt und eine Zielrufnummer der Mobilstation bereitgestellt, die sich in einem abhängig vom momentanen Aufenthaltsort des anrufenden Teilnehmers am nähestliegenden Fortbewegungsmittel befindet. Anschließend wird die Anrufverbindung entsprechend der Zielrufnummer zur Mobilstation geschaltet.

Das Kommunikationssystem gemäß der Erfindung zur Echtzeit-Aktualisierung der Diensteinformationen weist ein externes Kontroll- und Steuersystem auf, das, sobald es eine Änderung der Diensteinformationen in Echtzeit ermittelt hat, eine Diensterufnummer mit der Dienstenummer und der Transaktionsnummer wählt. Die Transaktionsnummer kennzeichnet dabei eine die Aktualisierung der Diensteinformationen bewirkende Transaktion. Darüber hinaus sind im Kontroll- und Steuersystem Mittel vorgesehen, die in einer Nachricht des Schnittstellenprotokolls die Diensterufnummer aussenden, und Mittel im Intelligenten Netz vorgesehen, die die empfangene Diensterufnummer in einer Nachricht des Netzprotokolls zu der Dienstesteuerungsstelle aussenden. Die Dienstesteuerungsstelle weist Mittel auf, die eine empfangene Transaktionsnummer auswerten und die bestehenden Diensteinformationen durch neue Diensteinformationen ersetzen. Darüber hinaus weist die Dienstesteuerungsstelle Mittel auf, die die Kommunikationsverbindung nach Durchführung der Transaktion auslösen und eine Information über das Auslösen in einer Nachricht des Netzprotokolls aussenden. Mittel im Intelligenten Netz senden anschließend die empfangene Information in einer Nachricht des Schnittstellenprotokolls zu der externen Kontroll- und Steuersystem.

Die Erfindung wird anhand von Ausführungsbeispielen, die in einer Zeichnung dargestellt sind, näher erläutert. Im einzelnen zeigen
- FIG 1: ein Blockschaltbild mit einem externen Kontroll- und Steuersystem und mit Einrichtungen eines Kommunikationssystems und eines Intelligenten Netzes,
- FIG 2: den Aufbau der vom Kontroll- und Steuersystem gewählten Diensterufnummern zur Kennzeichnung einer Aktualisierungs-Transaktion sowie einer Start- und Endetransaktion,
- FIG 3: den Nachrichtenfluss zwischen dem Kontroll- und Steuersystem und den Einrichtungen des Intelligenten Netzes für eine Echtzeit-Aktualisierung von Positionsinformationen eines Fortbewegungsmittels, und
- FIG 4: den Nachrichtenfluss für einen abgehenden Anruf zum Aufbau einer Kommunikationsverbindung von einer Mobilstation in dem Fortbewegungsmittel zu einem für den aktuellen Streckenabschnitt einer Fahrtstrecke zuständigen Fahrdienstleiter

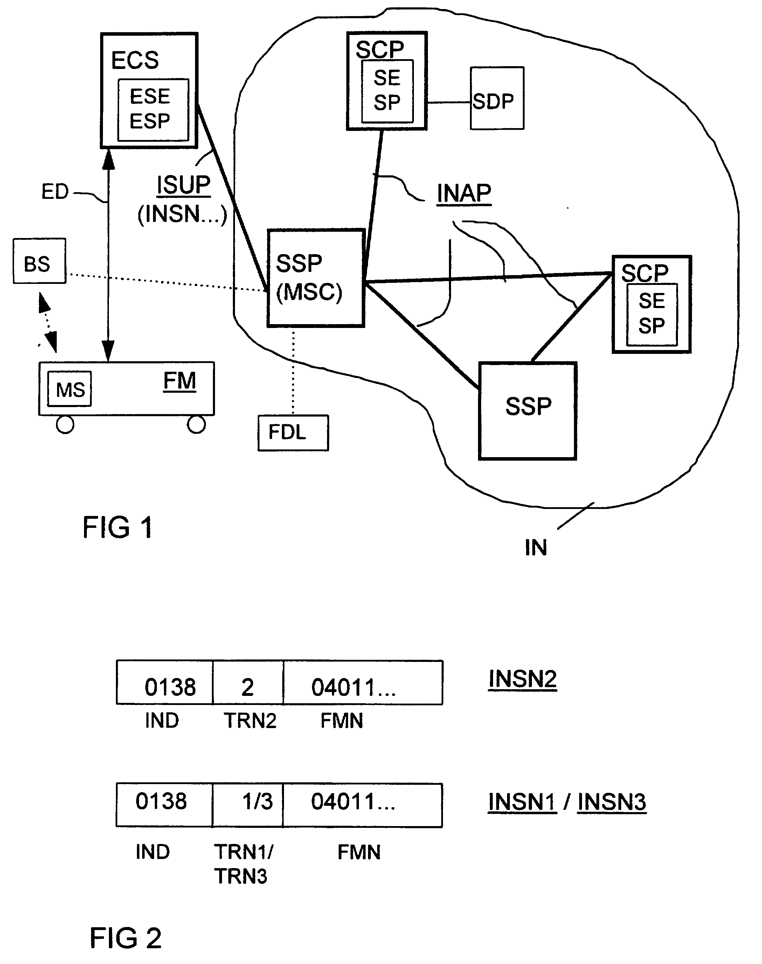

Figur 1 zeigt in einem Blockschaltbild Einrichtungen eines Kommunikationssystems, im vorliegenden Beispiel eine Basisstation BS und eine Mobilvermittlungsstelle MSC eines Mobil-Kommunikationssystems, Einrichtungen eines Intelligenten Netzes IN, im vorliegenden Beispiel jeweils zwei Dienstevermittlungsstellen SSP und Dienstesteuerungsstellen SCP, sowie ein externes Kontroll- und Steuersystem ECS. Das externe Kontroll- und Steuersystem ECS ist dabei an eine Dienstevermittlungsstelle SSP, die beispielsweise mit der Mobilvermittlungsstelle MSC in einem Netzknoten zusammengelegt ist, angeschlossen. Die jeweilige Dienstesteuerungsstelle SCP übernimmt neben der Dienstesteuerungsfunktion auch eine Dienstedatenfunktion zur Speicherung der für die Dienstebehandlung notwendigen Daten auf. Dabei kann die Dienstedatenfunktion entweder als eigenständige Dienstedatenstelle SDP in einem eigenen Netzknoten realisiert und an die Dienstesteuerungsstelle SCP angeschlossen oder alternativ dazu in der Dienstesteuerungsstelle SCP integriert sein. Im vorliegenden Beispiel übernimmt eine Dienstesteuerungsstelle SCP intern die Dienstedatenfunktion mit, während eine andere Dienstesteuerungsstelle SCP mit der eigenständigen Dienstedatenstelle SDP verbunden ist. Die Basisstation BS des Mobil-Kommunikationssystems weist eine leitungsgebundene Verbindung zur Mobilvermittlungsstelle MSC und eine drahtlose Verbindung zu einer Mobilstation MS, über die ein mobiler Teilnehmer Anrufe initiieren und empfangen kann, auf. Die Mobilstation MS stellt das Kommunikationsendgerät des mobilen Teilnehmers dar und befindet sich in einem Fortbewegungmittel FM, das im vorliegenden Beispiel einen Zug darstellt, der eine aus mehreren Streckenabschnitten bestehende Fahrtstrecke zurücklegt und dabei von einer für den jeweiligen Streckenabschnitt zuständigen Kontrollperson oder Kontrolleinrichtung überwacht wird. Mehrere Fahrdienstleiter bilden jeweils die Kontrollinstanz auf jeweils zugeordneten Streckenabschnitten bei einer Fahrtstrecke des Fortbewegungsmittels FM von einem Startort zu einem Zielort.

Das externe Kontroll- und Steuersystem ECS ermittelt Positionsinformationen über den genauen Aufenthaltsort des Fortbewegungsmittels FM. Dabei liefern beispielsweise Sensoren entlang der Fahrtstrecke entsprechende Daten ED, die dem Kontroll- und Steuersystem ECS über leitungsgebundene oder drahtlose Verbindungen mitgeteilt werden. So ist beispielsweise die Einbindung eines GPS-Systems (General Position System) zur Ermittlung der Positionsinformationen für das Fortbewegungsmittel FM möglich. Das Kontroll- und Steuersystem ECS weist eine Speichereinrichtung ESP zur Speicherung der empfangenen Daten ED und eine Steuereinrichtung ESE zum Steuern der Funktionen beim Senden und Empfangen von Informationen einerseits für die Verbindung zu den Sensoren bzw. Fortbewegungsmittel FM und andererseits für die Verbindung zum Intelligenten Netz IN auf.

Die Positionsinformationen über die aktuelle Streckenposition des Fortbewegungsmittels FM können als Diensteinformationen für einen Dienst des Intelligenten Netzes IN aufgefaßt und gemäß der Erfindung in Echtzeit aktualisiert werden. Dabei liefert das Kontroll- und Steuersystem ECS in Echtzeit aktualisierte Diensteinformationen und teilt sie einer Dienstesteuerungsstelle SCP im Intelligenten Netz IN mit. Die Dienstesteuerungsstelle SCP veranlaßt bei Initiierung des IN-Dienstes beispielsweise den Aufbau einer Anrufverbindung, die von der Mobilstation MS im Fortbewegungsmittel FM gestartet wurde, zu einem für den aktuellen Streckenabschnitt zuständigen Fahrdienstleiter FDL über die Dienstevermittlungsstelle SSP bzw. die Mobilvermittlungsstelle MSC. Eine weitere Anwendung besteht beispielsweise in der Administrierung von Fortbewegungsmitteln für ein möglichst effizientes Flottenmanagement-System, bei dem eine Verbindung von einer beliebigen Stelle aus zu einer Mobilstation in ein Fortbewegungsmittel aufgebaut wird, das sich am nächsten zum Anrufer befindet. Dabei erhält die Dienstesteuerungsstelle die aktuellen Positionsinformationen mehrerer Fortbewegungsmittel und ermittelt die Zielrufnummer der Mobilstation, an die der ankommende Anruf gerichtet ist und die sich dem jeweils dem anrufenden Teilnehmer am nächsten liegenden Fortbewegungsmittel befindet, für das Durchschalten der Anrufverbindung.

Als Anschlußtechnologie für das externe Kontroll- und Steuersystem ECS wird vorzugsweise ein ISDN-Primär-Multiplexanschluß verwendet, so daß zwischen dem Kontroll- und Steuersystem ECS und der Dienstevermittlungsstelle SSP eine Schnittstelle besteht, über die gemäß einem Schnittstellenprotokoll ISUP (ISDN-User-Part) kommuniziert werden kann. Um einen IN-Dialog zum Intelligenten Netz zu eröffnen, wird ein Auslösetrigger (originating line trigger) für das externe Kontroll- und Steuersystem ECS definiert oder die gewählte Rufnummer mit der Dienstekennung als Trigger genutzt. Dabei wählt die Steuereinrichtung ESE des Kontroll- und Steuersystem ECS eine Diensterufnummer INSN..., die eine Dienstenummer zur Kennzeichnung des IN-Dienstes sowie eine Transaktionsnummer zur Kennzeichnung einer bestimmten Transaktion enthält. Die Diensterufnummer INSN... wird in einer Nachricht des Schnittstellenprotokolls ISUP übertragen. Die Dienstenummer bewirkt den Aufbau der Kommunikationsverbindung zum Intelligenten Netz IN, d.h. zur Dienstevermittlungsstelle SSP. Die Dienstevermittlungsstelle SSP erkennt an der eintreffenden Transaktionsnummer, welche Transaktion von der Dienstesteuerungsstelle SCP durchzuführen ist und sendet daher die gesamte Diensterufnummer zu der angeschlossenen Dienstesteuerungsstelle SCP weiter. Dies erfolgt in einer Nachricht des Netzprotokolls INAP (Intelligent Network Application Part), das für die Kommunikation der Netzeinrichtungen des Intelligenten Netzes IN zur Verfügung steht.

Die Dienstesteuerungsstelle SCP weist eine Steuereinrichtung SE auf, von der die empfangene Transaktionsnummer ausgewertet und entsprechend des Transaktionstyps eine oder mehrere Folgeaktionen initiert bzw. durchgeführt werden. Eine in der Dienstesteuerungsstelle SCP vorgesehene Steuereinrichtung SP speichert Informationen wie z.B. die Diensteinformationen, die beispielsweise in den Nachrichten des Schnittstellenprotokolls ISUP und des Netzprotokolls INAP zusätzlich mit übertragen werden können. Die Übermittlung der Diensteinformationen in beispielsweise einem Datenfeld der jeweiligen Nachricht ist nicht zwingend notwendig, wenn beispielsweise neue Diensteinformationen, die bisherige Diensteinformationen ersetzen, von der Dienstesteuerungsstelle SCP selbst bereitgestellt werden. So wird beispielsweise zur Echtzeit-Aktualisierung der Positionsinformationen bei festgelegten Streckenabschnitten ohne Übersendung der jeweiligen Diensteinformationen durchgeführt, da automatisch bei Empfang einer die Aktualisierung der Diensteinformationen bewirkenden Transaktion die Dienstesteuerungsstelle SCP dieses als Erreichen des nächsten Streckenabschnitts interpretiert und die neuen Diensteinformationen bereitstellt. Dabei sind die neuen Diensteinformationen jeweils den durch die Transaktionsnummer identifizierten Aktualisierungs-Transaktionen fest zugeordnet. Sobald die Dienstesteuerungsstelle SCP eine die Aktualisierung der Dienstinformationen bewirkende Transaktionsnummer empfängt, ersetzt sie die bisherigen Diensteinformationen durch neue Diensteinformationen und speichert diese in der Speichereinrichtung SP oder in der angeschlossenen Dienstedatenstelle SDP ab.

Nach der Durchführung der jeweiligen Transaktion wird die Kommunikationsverbindung von der Dienstesteuerungsstelle SCP ausgelöst und das Auslösen in entsprechenden Nachrichten des Netzprotokolls INAP und des Schnittstellenprotokolls ISUP dem externen Kontroll- und Steuersystem ECS signalisiert. Zu diesem Zweck sendet die Steuereinrichtung SE der Dienstesteuerungsstelle SCP eine Auslösenachricht oder zumindest eine Information über das Auslösen der Kommunikationverbindung in einer Nachricht gemäß dem Netzprotokoll INAP zur Dienstevermittlungsstelle SSP, die diese Nachricht gemäß dem Schnittstellenprotokoll ISUP zum Kontroll- und Steuersystem ECS weiterleitet.

Im vorliegend dargestellten Beispiel eines Fortbewegungsmittel FM, das eine aus mehreren Streckenabschnitten bestehende Fahrtstrecke zurücklegt, wählt das Kontroll- und Steuersystem ECS eine erste Diensterufnummer mit einer Transaktionsnummer, die den Beginn mehrerer zusammenhängender Transaktionen mit wiederholter Aktualisierung der jeweils in Echtzeit zu ändernden Positionsformationen einleitet. Diese Transaktionsnummer wird dabei über die beiden Protokolle zur Dienstesteuerungsstelle SCP übertragen, die daraufhin Startinformationen - wie z.B. die Startposition des Fortbewegungsmittels FM - in ihre Speichereinrichtung SP lädt. Während der Fahrt des Fortbewegungsmittels FM auf der vorgegebenen Fahrtstrecke erfolgt dann die Echtzeit-Aktualisierung von Positionsinformationen jeweils dann, wenn das Fortbewegungsmittel FM einen neuen Streckenabschnitt erreicht. Dies wird dem Kontroll- und Steuersystem ECS über die Daten ED signalisiert, worauf das Kontroll- und Steuersystem ECS die Diensterufnummer mit der entsprechenden Transaktionsnummer zur Kennzeichnung der Aktualisierungs-Transaktion wählt. Werden die neuen Positionsinformationen entsprechend des neuen Streckenabschnittes in einem Datenfeld der Nachricht gemäß dem Schnittstellenprotokoll ISUP und dem Netzprotokoll INAP zusammen mit der Diensterufnummer übertragen, speichert die Dienstesteuerungsstelle SCP die eintreffenden Informationen in ihrer Speichereinrichtung SP ab. Im Anschluß daran ersetzt die Dienstesteuerungsstelle SCP die bisherigen Diensteinformationen - beispielsweise die im Initialisierungsschritt festgelegte Startposition - durch die neuen Diensteinformationen - beispielsweise die empfangenen Positionsinformationen oder die durch feste Zuordnung zu den Aktualisierungs-Transaktionen bereits festgelegten neuen Positionsinformationen. Der zuletzt beschriebene Vorgang wiederholt sich bei jeder Echtzeit-Aktualisierung der Diensteinformationen, erkennbar von dem Kontroll- und Steuersystem anhand der von den Sensoren gelieferten Daten über die Streckenpositionen des Fortbewegungsmittels FM.

Von dem externen Kontroll- und Steuersystem ECS kann eine weitere Diensterufnummer mit einer Transaktionsnummer gewählt werden, durch die das Ende mehrerer zusammenhängender Transaktionen mit wiederholter Aktualisierung der jeweils in Echtzeit geänderten Diensteinformationen signalisiert wird. Diese Diensterufnummer zur Identifikation einer Ende-Transaktion wird ebenfalls in einer Nachricht des Schnittstellenprotokolls ISUP zum Intelligenten Netz IN gesendet und von der Dienstevermittlungsstelle SSP in einer Nachricht des Netzprotokolls INAP zur Dienstesteuerungsstelle SCP weitergeleitet.

Für das vorliegend dargestellte Beispiel wird die Ende-Transaktion vom Kontroll- und Steuersystem ECS initiiert, wenn das Fortbewegungsmittel FM das Ende der Fahrtstrecke erreicht hat. Die Dienstesteuerungsstelle SCP kann daraufhin eine oder mehrere abschließende Dienstefunktionen durchführen, die beispielsweise im Sicherstellen von Informationen, Rücksetzen von Zähleinrichtungen für das Aktualisieren der Positionsinformationen in der Steuereinrichtung SE usw. bestehen. Dadurch, daß gemäß dem Gegenstand der Erfindung eine Echtzeit-Aktualisierung von Diensteinformationen zwischen dem Kontroll- und Steuersystem ECS und einer Dienstesteuerungsstelle SCP gemäß einem IN-Dienst mit einer hohen Übertragungsrate möglich ist, können Kommunikationsverbindungen für abgehende Anrufe und ankommende Anrufe von bzw. zu einer im Fortbewegungsmittel FM befindlichen Mobilstation aufgebaut werden, da der genaue Aufenthaltsort des Kommunikationsendgerätes durch die aktuellen Positionsinformationen der Dienstesteuerungsstelle SCP jederzeit bekannt ist.

Figur 2 zeigt den Aufbau der vom Kontroll- und Steuersystem gemäß Figur 1 jeweils gewählten Diensterufnummer zur Kennzeichnung einer bestimmten Transaktion, die von der Dienstesteuerungsstelle im Intelligenten Netz auszuführen ist. Abgebildet sind eine Diensterufnummer INSN2 für die Aktualisierungs-Transaktion, eine Diensterufnummer INSN1 für die Start-Transaktion und eine Diensterufnummer INSN3 für die Ende-Transaktion gemäß den obigen Ausführungen zu Figur 1. Jede Diensterufnummer INSN2, INSN1, INSN3 weist zunächst eine Dienstenummer IND auf, an der erkennbar ist, daß es sich um einen IN-Dienst handelt. Im vorliegenden Beispiel besteht die Dienstenummer IND aus der Ziffernkombination 0138. Darüberhinaus enthält jede Diensterufnummer INSN1...INSN3 eine Identifikationsnummer FMN zur Kennzeichnung des Fortbewegungsmittels gemäß dem in Figur 1 beschriebenen Ausführungsbeispiel, wobei die Identifikationsnummer FMN im genannten Beispiel die Zugnummer des Zuges darstellt. Die Identifikationsnummer FMN besteht beispielsweise aus der Ziffernkombination 4011... Eine Unterscheidung der verschiedenen Fortbewegungsmittel ist für beispielsweise ein Flottenmanagementsystem grundsätzlich notwendig. Sie ist aber auch erforderlich, wenn der für einen bestimmten Streckenabschnitt der zurückzulegenden Fahrtstrekke zuständige Fahrdienstleiter - wie es üblicher Weise der Fall ist - als Kontrollinstanz für mehrere Fortbewegungsmittel zuständig ist. Im übrigen ist anstelle des Fahrdienstleiters ebenso eine Kontrolleinrichtung verwendbar. Zur Unterscheidung, um welchen speziellen Transaktionstyp es sich handelt, enthalten die Dienstrufnummern INSN1...INSN3 jeweils eine individuelle Transaktionsnummer zur Identifikation der anstehenden Transaktion. So legt die Transaktionsnummer TRN2 in der Diensterufnummer ISNS2 eine zur Aktualisierung der Diensteinformationen vorgesehene Transaktion fest und besteht im einfachsten Fall aus der Ziffer 2. In entsprechender Weise definieren die Transaktionsnummer TRN1 und TRN3 in der Diensterufnummer INSN1 und in der Diensterufnummer INSN3 den Beginn und das Ende mehrerer zusammenhängender Transaktionen, bei denen jeweils die in Echtzeit geänderten Diensteinformationen von der Dienstesteuerungsstelle im Intelligenten Netz zu aktualisieren sind bzw. aktualisiert worden sind. Die Transaktionsnummer TRN1 besteht aus der Ziffer 1, während die Ziffer 3 die Transaktionsnummer TRN3 festlegt.

Wird von dem Kontroll- und Steuersystem ECS die Diensterufnummer INSN2, bestehend beispielsweise aus der Ziffernkombination 0138 2 04011.., gewählt, erfolgt ein Aufbau der Kommunikationsverbindung in das Intelligente Netz, in dem die Dienstesteuerungsstelle durch Auswertung der empfangenen Transaktionsnummer TRN2 die gewünschte Transaktion erkennt und daher die Diensteinformationen - im Beispiel die Positionsinformationen für das Fortbewegungsmittel - auf den neuesten Stand bringt - d.h. für das vorliegende Beispiel die bisherigen Positionsinformationen durch die neuen Positionsinformationen ersetzt. Empfängt die Dienstesteuerungsstelle die Diensterufnummer INSN1, erkennbar an der Ziffernkombination 0138 1 04011.. oder die Diensterufnummer INSN3 mit der Ziffernkombination 0138 3 04011.., so führt sie einen Initialisierungsschritt zum Starten anschließender Echtzeit-Aktualisierungen oder einen finalen Schritt zur Beendigung der mehrmals durchgeführten Echtzeit-Aktualisierungen für das in der Diensterufnummer anhand der Identifikationsnummer FMN erkennbaren Fortbewegungsmittel durch.

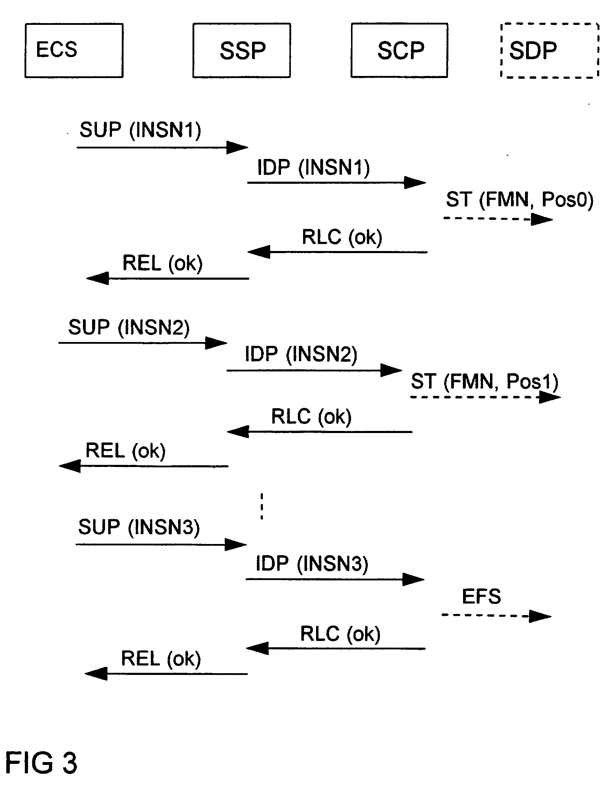

Figur 3 zeigt den Nachrichtenfluss zwischen dem Kontroll- und Steuersytem ECS und den Einrichtungen des Intelligenten Netzes, bestehend aus der Dienstevermittlungsstelle SSP und der Dienstesteuerungsstelle SCP, gegebenenfalls ergänzt durch die eigenständige Dienstedatenstelle SDP, zur Echtzeit-Aktualisierung von Diensteinformationen. Dabei werden entsprechend dem Ausführungsbeispiel in Figur 1 die Positionsinformationen eines Fortbewegungsmittels jeweils auf den neuesten Stand gebracht, das eine aus mehreren Streckenabschnitten bestehende Fahrtstrecke zurücklegt. Die zwischen dem Kontroll- und Steuersystem ECS und der Dienstevermittlungsstelle SSP übertragenen Nachrichten folgen dem in Figur 1 bezeichneten Schnittstellenprotokoll (ISUP), während die Nachrichten zwischen der Dienstevermittlungsstelle SSP und der Dienstesteuerungsstelle SCP sowie zur Dienstedatenstellen SDP gemäß dem ebenfalls in Figur 1 bezeichneten Neztprotokoll (INAP) gesendet und empfangen werden.

Das Kontroll- und Steuersystem ECS erzeugt eine Verbindungsaufbaunachricht SUP (Set Up), die die Diensterufnummer INSN1 zur Kennzeichnung der Start-Transaktion gemäß dem Aufbau in Figur 2 enthält, und sendet diese zur Dienstevermittlungsstelle SSP aus. Die Dienstevermittlungsstelle SSP erkennt an der in der Diensterufnummer INSN1 enthaltenen Dienstekennung, dass die Kommunikationsverbindung einen IN-Dienst betrifft, der in der angeschlossenen Dienstesteuerungsstelle SCP zu behandeln ist. Die Dienstekennung in Form der Dienstenummer adressiert darüber hinaus die jeweilige Dienstesteuerungsstelle. Die Signalisierung erfolgt mit einer initiierenden Nachricht IPD (Initial Detection Point) zur Dienstesteuerungsstelle SCP, in der die Diensterufnummer INSN1 mit der die Art der Transaktion festliegenden Transaktionsnummer enthalten ist. Für das in der Diensterufnummer INSN1 gekennzeichnete Fortbewegungsmittel legt die Dienstesteuerungsstelle SCT einen Speichereintrag in ihrer Speichereinrichtung an oder sendet eine Speichernachricht ST mit einer Identifikationsnummer FMN zur Identifikation des Fortbewegungsmittels und mit einer Startposition Pos0 zur Dienstedatenstelle SDP aus. Für den Fall, dass keine selbständige Dienstedatenstelle SDP vorhanden ist, werden die Informationen FMN und Pos0 in der Speichereinrichtung der Dienstesteuerungsstelle SCP gemäß dem beschriebenen Initialisierungsschritt eingetragen. Weitere Initialisierungsmaßnahmen können auf Grund des eintreffenden Transaktionstyps von der Dienstesteuerungsstelle SCP ebenfalls vorgenommen werden.

Im Anschluss an das Ausführen des Initialisierungsschritts initiiert die Dienstesteuerungsstelle SCP eine Auslösenachricht RLC (Release Call) und sendet in dieser Nachricht RLC eine Information ok, die die erfolgreiche Durchführung der Start-Transaktion signalisiert, zur Dienstevermittlungsstelle SSP mit. Die Dienstevermittlungsstelle SSP erkennt an der eintreffenden Nachricht, dass die Kommunikationsverbindung ausgelöst ist und sendet eine entsprechende Auslösenachricht REL gemäß dem Schnittstellenprotokoll mit der Information ok zum Kontroll- und Steuersystem ECS zurück. Die Auslösenachricht RLC wird gemäß dem Netzprotokoll, das die Netzeinrichtung des Intelligenten Netzes miteinander kommunizieren läßt, übertragen.

Sobald von dem Kontroll- und Steuersystem eine Änderung der Diensteinformationen - das heisst der Positionsinformationen des Fortbewegungsmittels - in Echtzeit festgestellt wird, wählt sie die Diensterufnummer INSN2 und sendet sie in einer weiteren Verbindungsaufbaunachricht SUP zum Intelligenten Netz aus. Die Dienstevermittlungsstelle SSP erzeugt auf Grund der eintreffenden Diensterufnummer eine weitere initiierende Nachricht IDP und sendet in ihr die empfangene Diensterufnummer INSN2 zu der Dienstesteuerungsstelle SCP weiter. Die Dienstesteuerungsstelle SCP erkennt anhand der in der Diensterufnummer INSN2 enthaltenen Transaktionsnummer, das eine Änderung der Positionsinformationen in Echtzeit vom Steuerund Kontrollsystem festgestellt wurde, so dass die in ihrer Speichereinrichtung oder in der angeschlossenen Dienstedatenstelle SDP eingetragenen Positionsinformationen für das von der Aktualisierung betroffenen Fortbewegungsmittel zu aktualisieren sind.

Daher generiert die Dienstesteuerungsstelle SCP wiederum die Speichernachricht ST und sendet in ihr die Identifikationsnummer FMN zusammen mit neuen Positionsinformationen Pos1 zur Dienstedatenstelle SDP aus. Die neuen Positionsinformationen Pos1 ersetzen die Startposition Pos0, die zu Beginn der Echtzeit-Aktualisierungsphasen initialisiert wurde. Für den Fall, dass die gemäß den Protokollen definierten Nachrichten ein Datenfeld zur Aufnahme von Nutzinformationen aufweisen, können die neuen Positionsinformationen Pos1 auch vom Kontrollund Steuersystem ECS direkt bereitgestellt und zu den Einrichtungen des Intelligenten Netzes in den jeweiligen Nachrichten übertragen werden. Ist dies - wie im vorliegenden Beispiel - nicht der Fall, so erkennt die Dienstesteuerungsstelle SCT bereits am Eintreffen der Transaktionsnummer, die eine Aktualisierung definiert, dass ein festgelegter Strekkenabschnitt vom Fortbewegungsmittel erreicht wurde und daher eine Änderung der Positionsinformationen durch Eintragen der durch Zuordnung zu den einzelnen Streckenabschnitten bereits festgelegten neuen Positionsinformationen ausgeführt wird. Jedes Eintreffen einer Transaktionsnummer für die Aktualisierung der bestehenden Positionsinformationen wird von der Dienstesteuerungsstelle SCT als das Erreichen des nächsten Streckenabschnitts interpretiert, so dass ein Update der bisherigen Positionsinformationen, zum Beispiel Pos0, durch die jeweils neuen Positionsinformationen, zum Beispiel Pos1, von der Dienstesteuerungsstelle SCT vorgenommen wird.

Ist die Aktualisierung der in Echtzeit veränderten Positionsinformationen ausgeführt, sendet die Dienstesteuerungsstelle SCP wiederum eine Auslösenachricht RLC mit der Information ok zur Dienstevermittlungsstelle SSP, die das Auslösen der Kommunikationsverbindung in einer entsprechenden Auslösenachricht REL mit der Information ok gemäß dem Schnittstellenprotokoll zum Kontroll- und Steuersystetm zurücksendet. Üblicherweise erfolgen im Anschluss an die erste Echtzeit-Aktualisierung der Positionsinformationen weitere Aktualisierungsschritte, wenn von dem Kontroll- und Steuersystem ECS eine Änderung der Positionsinformationen in Echtzeit festgestellt und über die Wahl der entsprechenden Transaktionsnummer den Einrichtungen des Intelligenten Netzes zur Kenntnis gebracht wird. Dabei erfolgt der Austausch der zuvor beschriebenen Nachrichten zwischen den dargestellten Einrichtungen in entsprechender Weise.

Hat das Fortbewegungsmittel das Ende der Fahrtstrecke erreicht, kann vom Kontroll- und Steuersystem ECS eine weitere Verbindungsaufbaunachricht SUP initiiert werden, die eine Diensterufnummer INSN3 mit einer das Ende der zusammenhängenden Echtzeit-Aktualisierungen kennzeichnenden Transaktionsnummer enthält und zum Intelligenten Netz übertragen wird. Die Dienstevermittlungsstelle SSP baut auf Grund der eintreffenden Diensterufnummer INSN3 eine Kommunikationsverbindung zur Dienstesteuerungsstelle SCP auf und sendet eine weitere initiierende Nachricht IDP mit der Diensterufnummer INSN3 dorthin aus. Die Dienstesteuerungsstelle SCP erkennt an der eintreffenden Transaktionsnummer, dass der zusammenhängende Aktualisierungsvorgang, bestehend aus mehreren in Echtzeit durchgeführten Aktualisierungs-Transaktionen, vorliegt und iniitiiert daraufhin eine Endebehandlung für den IN-Dienst. Bevor beispielsweise ein Löschen der zuletzt eingetragenen Positionsinformationen für das Fortbewegungsmittel erfolgt, können die während der durchlaufenden Fahrtstrecke gewonnenen Informationen für eine spätere Kontrolle auch zwischengespeichert werden. Die Dienstesteuerungsstelle SCP sendet eine Endenachricht EFS zur Dienstedatenstelle SDP aus, um ihr zu signalisieren, dass keine weiteren Aktualisierungsschritte mehr durchgeführt werden. Über die beiden Auslösenachrichten RLC und REL, die jeweils die Information ok zur Kennzeichnung einer erfolgreich durchgeführten Transaktion enthalten, wird dem Kontroll- und Steuersystem ECS das Auslösen der Kommunikationsverbindung im Rahmen der Ende-Transaktion signalisiert.

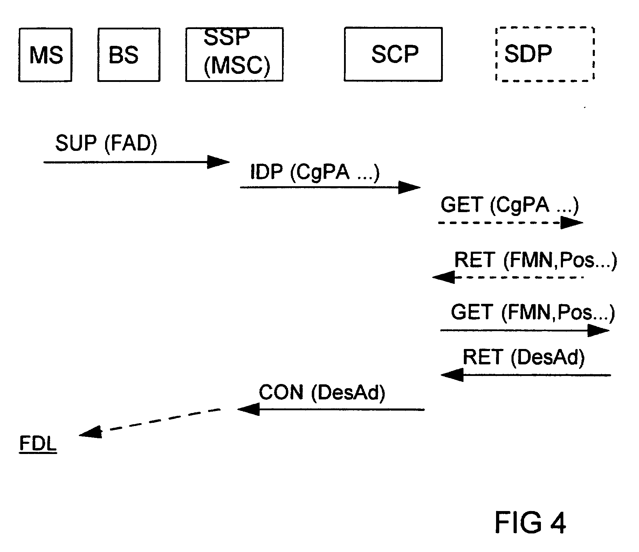

Figur 4 zeigt den Nachrichtenfluss für einen abgehenden Anruf, der von einer im Fortbewegungsmittel befindlichen Mobilstation MS initiiert und an eine Kontrollperson oder Kontrolleinrichtung - im Beispiel an einen Fahrdienstleiter FDL - gerichtet wird. Von dem abgehenden Anruf sind zunächst die Einrichtungen des Mobil-Kommunikationssystems betroffen, das heisst die für die Mobilstation MS momentan zuständige Basisstation BS und Mobilvermittlungsstelle MSC. Von der mit der Mobilvermittlungsstelle MSC in einem Netzknoten zusammengelegten Dienstevermittlungsstelle SSP erfolgt die Verzweigung der Kommunikationsverbindung zur Dienstesteuerungsstelle SCP, die die weitere Anrufbehandlung - da es sich um einen angewählten IN-Dienst handelt - gegebenenfalls zusammen mit der eigenständigen Dienstedatenstelle SDP, übernimmt. Drückt der Anrufer zum Initiieren des abgehenden Anrufs beispielsweise eine bestimmte Taste am Kommunikationsendgerät oder wählt er eine bestimmte Rufnummer, die für die Kontrollperson oder die Kontrolleinrichtung, zu der er einen Anruf tätigen möchte, reserviert ist, am Kommunikationsendgerät, so erzeugt die Mobilstation MS eine Verbindungsaufbaunachricht SUP (Setup). Über die Funkschnittstelle zur Basisstation BS und eine drahtgebundene Verbindung zur Mobilvermittlungsstelle MSC empfängt die Dienstevermittlungsstelle SSP die Verbindungsaufbaunachricht SUP, in der eine funktionale Adresse FAD zur Festlegung des Anrufziels enthalten ist. So kann die funktionale Adresse FAD beispielsweise aus der am Kommunikationsendgerät gewählten Rufnummer bestehen. Die Dienstevermittlungsstelle SSP generiert eine initiierende Nachricht IDP, um einen Ausstieg aus der üblichen Anrufverarbeitung durch die Mobilvermittlungsstelle MSC zu erreichen und zwischenzeitlich eine Kommunikationsverbindung im Intelligenten Netz zur angeschlossenen Dienstesteuerungsstelle SCP aufzubauen. In der initiierenden Nachricht IDP wird unter anderem eine Adresse CgPA (Calling Party Adress) mitgesendet, die eine Information über den anrufenden Teilnehmer bzw. die vom anrufenden Teilnehmer benutzte Mobilstation MS enthält. Der anrufende Teilnehmer mit der Mobilstation MS ist beispielsweise der Zugführer des Forbewegungsmittels, dessen Positionsinformationen laufend in Echtzeit aktualisiert werden. Da der Zugführer vom Fahrdienstleiter FDL Informationen wünscht, hat er die für die Kontrollperson bzw. Kontrolleinrichtung reservierte Rufnummer am Kommunikationsendgerät gewählt. Die Dienstesteuerungsstelle SCP sendet eine Anforderungsnachricht GET zur Dienstedatenstelle SDP, in der die Adresse CgPA mitgesendet wird. Die Dienstedatenstelle SDP ermittelt auf Grund der empfangenen Adresse CgPA den geeigneten Speichereintrag mit den für das Fortbewegungsmittel hinterlegten Informationen. Sie liest daher aus dem Speichereintrag die Identifikationsnummer FMN zur Kennzeichnung des Fortbewegungsmittels und die aktuellen Positionsinformationen Pos... zur Kennzeichnung der momentanen Positon des Fortbewegungsmittels abhängig vom momentanen Streckenabschnitt und sendet die ermittelten Informationen in einer Antwortnachricht RET zur Dienstesteuerungsstelle SCP zurück.

In einem zweiten Schritt erzeugt die Dienstesteuerungsstelle SCP eine erneute Anforderungsnachricht GET und sendet in ihr die empfangenen Informationen FMN, Pos... zur Dienstedatenstelle SDP zurück mit der Bitte, die Zielrufnummer des Fahrdienstleiters zu übersenden. Abhängig vom momentanen Aufenthaltsort des Fortbewegungsmittels, das heisst im vorliegenden Beispiel von dem Streckenabschnitt der Fahrtstrecke, ist ein anderer Fahrdienstleiter FDL zuständig, zu dem die Anrufverbindung zu schalten ist. In einer weiteren Antwortnachricht RET liefert die Dienstedatenstelle SDP die Zielrufnummer DesAd des gerade zuständigen Fahrdienstleiters. Für den Fall, dass die Dienstedatenfunktion in der Dienstesteuerungsstelle SCT integriert ist, erfolgt kein Nachrichtenfluss zu anderen Einrichtungen, jedoch erfolgt die Bereitstellung der Zielrufnummer ebenfalls in zwei aufeinanderfolgenden Verfahrensschritten. Sobald die Dienstevermittlungsstelle SCP die aktuellen Positionsinformationen ermittelt und die Zielrufnummer bereitgestellt hat, sendet sie eine Verbindungsdurchführungsnachricht CON (Connect) zur Dienstevermittlungsstelle SSP aus, in der die Zielrufnummer DesAd des gerade zuständigen Fahrdienstleiters FDL enthalten ist. Die Dienstevermittlungsstelle SSP liefert der Mobilvermittlungsstelle MSC diese Zielinformation, so dass die Kommunikationsverbindung zum Fahrdienstleiter FDL in der für ein Mobil-Kommunikationssystem bekannten Art und Weise geschaltet werden kann. Dadurch, dass die Dienstesteuerungsstelle SCP im Intelligenten Netz laufend über Veränderungen der Positionsinformationen in Echtzeit informiert wurde und entsprechende Aktualisierungs-Transaktionen ausgeführt werden, kann ein Aufbau der Kommunikationsverbindung von der Mobilstation MS eines Zugführers zu einer für einen bestimmten Streckenabschnitt zuständigen Kontrollinstanz, beispielsweise dem Fahrdienstleiter, durch Nutzung eines IN-Dienstes aufgebaut werden. Eine andere Anwendung des IN-Dienstes besteht darin, auch für einen ankommenden Anruf, der an eine Kontrollinstanz gerichtet und durch eine Rufnummer von einem anrufenden Teilnehmer initiiert wurde, eine Anrufverbindung zum Intelligenten Netz aufzubauen. Die Dienstesteuerungsstelle SCP ermittelt die aktuellen Positionsinformationen mehrerer Fortbewegungsmittel und liefert eine Zielrufnummer der Mobilstation, die sich in einem am nähesten zum anrufenden Teilnehmer liegenden Fortbewegungsmittel befindet. Entsprechend der bereitgestellten Zielrufnummer wird daraufhin eine Anrufverbindung zu der durch die ausgewählte Zielrufnummer festgelegten Mobilstation im Mobil-Kommunikationssystem geschaltet. Grundlage hierfür ist ebenso die Echtzeit-Aktualisierung von Diensteinformationen - im vorliegenden Beispiel ebenfalls von Positionsinformationen mehrerer Fortbewegungsmittel - in Einrichtungen des Intelligenten Netzes über den Austausch von Nachrichten gemäß dem Schnittstellenprotokoll und dem Netzprotokoll mit hoher Transaktionsrate.

## Patentansprüche

1. Verfahren zur Echtzeit-Aktualisierung von Diensteinformationen für Dienste eines Intelligenten Netzes (IN), das zumindest eine Dienstesteuerungsstelle (SCP) und eine Dienstevermittlungsstelle (SSP) aufweist, die Nachrichten gemäß einem Netzprotokoll senden und empfangen können, und
zumindest eine Schnittstelle zur Kommunikation mit einer externen Einrichtung über ein Schnittstellenprotokoll aufweist,
**mit folgenden Schritten:**
**a)** von einem externen Kontroll- und Steuersystem (ECS), das eine Änderung der Diensteinformationen in Echtzeit ermittelt, eine Diensterufnummer (INSN2) gewählt wird, die zumindest
eine Dienstenummer (IND) zur Kennzeichnung **eines** Dienstes enthält, anhand der eine Kommunikationsverbindung zum Intelligenten Netz (IN) aufgebaut wird, und
eine Transaktionsnummer (TRN2) zur Kennzeichnung einer die Aktualisierung der Diensteinformationen bewirkenden Transaktion enthält,
**dadurch gekennzeichnet, dass**
**b)** die Diensterufnummer (INSN2) in Nachrichten (SUP, IDP) des Schnittstellenprotokolls und des Netzprotokolls zu der Dienstesteuerungsstelle (SCP) übertragen wird, die die empfangene Transaktionsnummer (TRN2) auswertet und bestehende Diensteinformationen durch neue Diensteinformationen ersetzt, und bei dem
**c)** die Kommunikationsverbindung nach Durchführung der Transaktion durch die Dienstesteuerungsstelle (SCP) ausgelöst und das Auslösen in Nachrichten (RLC, REL) des Netzprotokolls und des Schnittstellenprotokolls dem externen Kontroll- und Steuersystem (ECS) signalisiert wird.

2. Verfahren nach Anspruch 1, bei dem
von dem externen Kontroll- und Steuersystem (ECS) eine erste Diensterufnummer (INSN1) mit einer Transaktionsnummer (TRN1) gewählt und zum Intelligenten Netz (IN) gesendet wird, durch die **Transaktionsnummer** der Beginn mehrerer zusammenhängender Transaktionen mit wiederholter Aktualisierung der jeweils in Echtzeit zu ändernden Diensteinformationen eingeleitet und Startinformationen von der Dienstesteuerungsstelle (SCP) geladen werden.

3. Verfahren nach Anspruch 1 oder 2, bei dem
neue Diensteinformationen, die von der Dienstesteuerungsstelle (SCP) bei jeder Aktualisierung bereitgestellt werden, jeweils den durch die Transaktionsnummer (TRN2) identifizierten Transaktionen fest zugeordnet werden.

4. Verfahren nach einem der vorhergehenden Ansprüche, bei dem
von dem externen Kontroll- und Steuersystem (ECS) eine Diensterufnummer (INSN3) mit einer Transaktionsnummer (TRN3) gewählt und zum Intelligenten Netz (IN) gesendet wird, durch die **Transaktionsnummer** das Ende mehrerer zusammenhängender Transaktionen mit wiederholter Aktualisierung der jeweils in Echtzeit geänderten Diensteinformationen der Dienstesteuerungsstelle (SCP) signalisiert wird.

5. Verfahren nach Anspruch 4, bei dem
von der Dienstesteuerungsstelle (SCP) eine oder mehrere abschließende Dienstefunktionen bei Erkennen der das Ende der Transaktionen kennzeichnenden Transaktionsnummer (TRN3) durchgeführt werden.

6. Verfahren nach einem der vorhergehenden Ansprüche für eine Administrierung von Fortbewegungsmitteln (FM), bei dem
- Positionsinformationen über den Aufenthaltsort **eines** Fortbewegungsmittels (FM) als Diensteinformationen von dem externen Kontroll- und Steuersystem (ECS) in Echtzeit empfangen werden,
- die Diensterufnummer (INSN2) mit der Transaktionsnummer (TRN2) zur Kennzeichnung der die Aktualisierung der Positionsinformationen bewirkenden Transaktion von dem externen Kontroll- und Steuersystem (ECS) jeweils gewählt wird, sobald das Fortbewegungsmittel (FM) einen neuen Aufenthaltsort erreicht, und
- die bisherigen Positionsinformationen (Pos0) jeweils durch neue Positionsinformationen (Pos1), die dem neuen Aufenthaltsort fest zugeordnet sind, von der Dienstesteuerungsstelle (SCP) bei Empfang der Transaktionsnummer (TRN2) ersetzt werden.

7. Verfahren nach Anspruch 6, bei dem
- von dem Fortbewegungsmittel (FM) eine aus mehreren Streckenabschnitten bestehende Fahrtstrecke zurückgelegt wird,
- von der Dienstesteuerungsstelle (SCP) eine den Beginn der Fahrtstrecke kennzeichnende erste Transaktionsnummer (TRN1) empfangen und daraufhin eine Startposition (Pos0) als Positionsinformation initialisiert wird,
- von der Dienstesteuerungsstelle (SCP) jeweils bei Erreichen eines neuen Streckenabschnitts eine die Aktualisierung der Positionsinformationen kennzeichnende zweite Transaktionsnummer (TRN2) empfangen und die Positionsinformationen (Pos0) geändert werden.

8. Verfahren nach Anspruch 6 oder 7, bei dem
die Diensterufnummer (**INSN1**, INSN2) eine weitere Transaktionsnummer (FMN) zur Kennzeichnung des Fortbewegungsmittels (FM) enthält.

9. Verfahren nach einem der Ansprüche 6 bis 8, bei dem
durch eine weitere Transaktionsnummer (FMN) in der Diensterufnummer (**INSN1**, INSN2) die Zugnummer eines als Fortbewegungsmittel (FM) verwendeten Zuges gekennzeichnet wird.

10. Verfahren nach einem der Ansprüche 6 bis 9, bei dem
- für einen abgehenden Anruf, der von einer im Fortbewegungsmittel (FM) befindlichen Mobilstation (MS) initiiert und an eine durch eine **funktionale Adresse** festgelegte Kontrollperson oder Kontrolleinrichtung gerichtet wird, eine Anrufverbindung zu dem Intelligenten Netz (IN) aufgebaut wird,
- von der Dienstesteuerungsstelle (SCP) die aktuellen Positionsinformationen (Pos...) ermittelt werden und eine Zielrufnummer (DesAd) der abhängig vom momentanen Aufenthaltsort des Fortbewegungsmittels (FM) gerade zuständigen Kontrollperson oder Kontrolleinrichtung bereitgestellt wird, und
- die Anrufverbindung entsprechend der Zielrufnummer (DesAd) zu der zuständigen Kontrollperson oder Kontrolleinrichtung geschaltet wird.

11. Verfahren nach einem der Ansprüche 1 bis 5, bei dem
- für einen ankommenden Anruf eine Anrufverbindung zu dem Intelligenten Netz (IN) aufgebaut wird,
- von der Dienstesteuerungsstelle (SCP) die aktuellen Positionsinformationen mehrerer Fortbewegungsmittel ermittelt werden und eine Zielrufnummer einer Mobilstation, die sich in einem abhängig vom momentanen Aufenthaltsort des anrufenden Teilnehmers am nähesten liegenden Fortbewegungsmittel befindet, bereitgestellt wird, und
- die Anrufverbindung entsprechend der Zielrufnummer zu der Mobilstation geschaltet wird.

12. Kommunikationssystem zur Echtzeit-Aktualisierung von Diensteinformationen für Dienste eines Intelligenten Netzes (IN), das
- zumindest eine Dienstesteuerungsstelle (SCP) und eine Dienstevermittlungsstelle (SSP) aufweist, die Nachrichten gemäß einem Netzprotokoll senden und empfangen können, und
- zumindest eine Schnittstelle zur Kommunikation mit einer externen Einrichtung über ein Schnittstellenprotokoll aufweist,
mit
- einem externen Kontroll- und Steuersystem (ECS), das geeignet ist, sobald es eine Änderung der Diensteinformationen in Echtzeit ermittelt, eine Diensterufnummer (INSN2), die zumindest eine Dienstenummer (IND) zur Kennzeichnung eines Dienstes aufweist, zu wählen und mit der Dienstenummer (IND) den Aufbau einer Kommunikationsverbindung zum Intelligenten Netz (IN) zu bewirken, wobei die Diensterufnummer (INSN2) auch eine Transaktionsnummer (TRN2) zur Kennzeichnung einer die Aktualisierung der Diensteinformationen bewirkenden Transaktion aufweist,
**gekennzeichnet durch**
- Mittel (ESE) im Kontroll- und Steuersystem (ECS), die in einer Nachricht (SUP) des Schnittstellenprotokolls die Diensterufnummer (INSN2) aussenden, und Mittel (SSP) im Intelligenten Netz (IN), die die empfangene Diensterufnummer (INSN2) in einer Nachricht (IDP) des Netzprotokolls zu der Dienstesteuerungsstelle (SCP) aussenden,
- Mittel (SE) in der Dienstesteuerungsstelle (SCP), die eine empfangene Transaktionsnummer (TRN2) auswerten und die bestehende Diensteinformationen **durch** neue Diensteinformationen ersetzen, und
die Kommunikationsverbindung nach Durchführung der Transaktion auslösen und eine Information (ok) über das Auslösen in einer Nachricht (RLC) des Netzprotokolls aussenden, und mit
- Mittel (SSP) im Intelligenten Netz (IN), die die empfangene Information in einer Nachricht (REL) des Schnittstellenprotokolls zu der externen Kontrollund Steuersystem (ECS) senden.

## Claims

1. Method for real-time updating of service information for IN services of an intelligent network (IN), featuring at least one Service Control Point (SCP) and one Service Switching Point (SSP) which can send and receive the messages in accordance with a network protocol (INAP), and
features at least one interface for communication with an external control device via an interface protocol,
with the following steps:
a)a service directory number (INSN2) is dialed by an external checking and control system (ECS), which detects a change in the service information in real-time, which at least
contains a service number (IND) for identifying a service, on the basis of which a communication connection to the intelligent network (IN) is established, and
contains a transaction number (TRN2) to identify a transaction which updates the service information,
**characterized in that**
b)the service directory number (INSN2) is sent in messages (SUP, IDP) of the interface protocol and of the network protocol to the Service Control Point (SCP) which evaluates the received transaction number (TRN2) and replaces existing service information by new service information and for which
c)the communication connection is released by the Service Control Point (SCP) after the transaction is executed and the release is signaled in messages (RLC, REL) of the network protocol and of the interface protocol to the external checking and control system (ECS).

2. Method in accordance with Claim 1, in which
a first service directory number (INSN1) with a transaction number (TRN1) is dialed by the external checking and control system (ECS) and sent to the intelligent network (IN) through which the transaction number initiates the beginning of a contiguous transaction with repeated updating of the service information to be changed in real-time and start information is loaded by the Service Control Point (SCP).

3. Method in accordance with Claim 1 or 2, in which
new service information which is provided by the Service Control Point (SCP) for each updating is given a fixed assignment to the transaction identified by the transaction number (TRN2) in each case.

4. Method in accordance with one of the previous claims, in which a service directory number (INSN3) with a transaction number (TRN3) is dialed by the external checking and control system (ECS) and sent to the intelligent network (IN), the transaction number of which signals to the Service Control Point (SCP) the end of a number of contiguous transactions with repeated updating of the service information updated in real-time in each case.

5. Method in accordance with Claim 4, in which
one or more concluding service functions are executed by the Service Control Point (SCP) on detection of the transaction number (TRN3) identifying the end of the transaction.

6. Method in accordance with one of the previous claims for administration of means of transport (FM), in which
- position information about the location of a means of transport (FM) is received in real-time as service information by the external checking and control system (ECS),
- the service directory number (INSN2) with the transaction number (TRN2) to identify the transaction which updates the position information is dialed in each case by the external checking and control system (ECS) as soon as the means of transport (FM) reaches a new location, and
- the current position information (e.g. Pos0) is replaced in each case by new position information (e.g. Pos1), which has a fixed assignment to the new location by the Service Control Point (SCP) on receipt of the transaction number(TRN2).

7. Method in accordance with Claim 6, in which
- a route comprising a number of route sections is covered by the means of transport (FM),
- a first transaction number (TRN1) identifying the beginning of the route is received by the Service Control Point (SCP) and subsequently a start position (Pos0) is initialized as position information,
- a second transaction number (TRN2) identifying the updating of the position information is sent by the Service Control Point (SCP) each time that a new route section is reached and the position information (Pos0) is changed

8. Method in accordance with Claim 6 or 7, in which
the service directory number (INSN1, INSN2) contains a further transaction number (FMN) to identify the means of transport (FM).

9. Method in accordance with one of the Claims 6 to 8, in which by a further transaction number (FMN) in the service directory number (INSN1, INSN2) the train number of a train used as a means of transport (FM) is identified.

10. Method in accordance with one of the claims 6 to 9, in which
- for an outgoing call which is initiated by a mobile station (MS) located in the means of transport (FM) and directed to a controller or control device defined by the functional address, a call is set up to the intelligent network (IN),
- the current position information (Pos...) is determined by the Service Control Point (SCP) and a destination directory number (DesAd) which is provided depending on the current location of controller or control device responsible for the means of transport (FM), and
- the call is switched through according to the destination number (DesAd) to the responsible controller or control device.

11. Method in accordance with one of the Claims 1 to 5, in which
- for an incoming call a connection is set up to the intelligent network (IN),
- the current position information of a number of means of transport is determined by the Service Control Point (SCP) and a destination number of a mobile station which is located in a means of transport depending on the current location of the calling subscriber is provided, and
- the connection is switched to the mobile station according to the destination directory number.

12. Communication system for real-time updating of service information for IN services of an intelligent network (IN) which
- features at least one Service Control Point (SCP) and a Service Switching Point (SSP) which can send and receive messages in accordance with a network protocol, and
- feature at least one interface for communication with an external control device via an interface protocol,
with
- an external checking and control system (ECS) which is suitable, as soon as it determines a change of the service information, for dialing a service directory number (INSN2), which features at least one service number (IND) for identifying a service and with the service number (IND) of setting up a communication connection to the intelligent network (IN), in which case the service directory number (INSN2) also features a transaction number (TRN2) to identify a transaction which actually updates the service information,
**characterized by**
- means (ESE) in the checking and control system (ECS), which in a message (SUP) of the interface protocol /(IZUP) sends the service directory number (INSN2), and means (SSP) in the intelligent network (IN), which sends the received service directory number (INSN2) in a message (IDP) of the network protocol (INAP) to the Service Control Point (SCP),
- means (SE) in the Service Control Point (SCP) which evaluates a received transaction number (TRN2) replaces the existing service information by new service information, and the releases the communication connection after executing the transaction and sends information (ok) about the release in a message (RLC) of the network protocol, and with
- means (SSP) in the intelligent network (IN) which sends the received information in a message (REL) of the interface protocol to the external checking and control system (ECS).

## Revendications

1. Procédé destiné à la mise à jour en temps réel d'informations relatives aux services d'un réseau intelligent (IN) comportant
au moins un centre de contrôle des services (SCP) et un central de commutation des services (SSP), lesquels peuvent émettre et recevoir des messages conformes à un protocole du réseau et
au moins une interface pour la communication avec un dispositif externe par l'intermédiaire d'un protocole d'interface,
**comprenant les étapes suivantes:**
a) un système externe de contrôle et de commande (ECS), qui détecte en temps réel une modification des informations relatives aux services, sélectionne un numéro d'appel des services (INSN2) comprenant au moins
un numéro des services (IND) destiné à caractériser **l'un** des services et à l'aide duquel une liaison de communication est établie vers le réseau intelligent (IN) et
un numéro de transaction (TRN2) destiné à caractériser une transaction provoquant la mise à jour des informations relatives aux services,
**caractérisé par le fait que**
b) le numéro d'appel des services (INSN2) est transmis, dans des messages (SUP, IDP) du protocole d'interface et du protocole du réseau, au centre de contrôle des services (SCP) qui analyse le numéro de transaction (TRN2) reçu et remplace des informations en vigueur relatives aux services par de nouvelles informations relatives aux services et dans lequel
c) la liaison de communication est libérée, après exécution de la transaction par le centre de contrôle des services (SCP) et la libération est signalisée au système externe de contrôle et de commande (ECS) dans des messages (RLC, REL) du protocole du réseau et du protocole d'interface.

2. Procédé selon la revendication 1 dans lequel
le système externe de contrôle et de commande (ECS) sélectionne un premier numéro d'appel des services (INSN1) comprenant un numéro de transaction (TRN1) et l'envoie au réseau intelligent (IN), **le numéro de transaction** déclenche le début de plusieurs transactions cohérentes assurant la mise à jour répétée de chaque information des services à modifier en temps réel et les informations de départ sont chargées par le centre de contrôle des services (SCP).

3. Procédé selon la revendication 1 ou 2 dans lequel
de nouvelles informations relatives aux services, qui sont mises à disposition lors de chaque mise à jour par le centre de contrôle des services (SCP), sont affectées d'une façon fixe à chacune des transactions identifiée par le numéro de transaction (TRN2).

4. Procédé selon l'une des revendications précédentes dans lequel
le centre externe de contrôle des services (SCP) sélectionne un numéro d'appel des services (INSN3) comprenant un numéro de transaction (TRN3) et l'envoie au réseau intelligent (IN) et dans lequel, grâce au **numéro de transaction**, la fin de plusieurs transactions cohérentes assurant une mise à jour répétée de chacune des informations relatives aux services modifiées en temps réel, est signalisée au centre de contrôle des services (SCP).

5. Procédé selon la revendication 4 dans lequel
le centre de contrôle des services (SCP) exécute une ou plusieurs fonctions de fermeture des services lorsque le numéro de transaction (TRN3) caractérisant la fin des transactions est reconnu.

6. Procédé selon l'une des revendications précédentes destiné à une gestion de moyens de transport (FM) dans lequel
- des informations de position relatives à l'emplacement d'un moyen de transport (FM) sont reçues en temps réel en tant qu'informations relatives aux services par le système externe de contrôle et de commande (ECS),
- le numéro d'appel des services (INSN2) comprenant le numéro de transaction (TRN2) destiné à caractériser la transaction provoquant la mise à jour des informations de position est sélectionné par le système externe de contrôle et de commande (ECS), dès que le moyen de transport (FM) parvient à un nouvel emplacement et
- les informations de position, qui étaient en vigueur jusqu'alors (Pos0), sont respectivement remplacées par de nouvelles informations de position (Pos1), qui sont affectées d'une façon fixe au nouvel emplacement, par le centre de contrôle des services (SCP), à la réception du numéro de transaction (TRN2).

7. Procédé selon la revendication 6 dans lequel
- le moyen de transport (FM) parcourt un trajet composé de plusieurs sections,
- le centre de contrôle des services (SCP) reçoit un premier numéro de transaction (TRN1) caractérisant le début du trajet et, sur ce, initialise une position de départ (Pos0) en tant qu'information de position,
- le centre de contrôle des services (SCP) reçoit, chaque fois qu'une nouvelle section du trajet est atteinte, un deuxième numéro de transaction caractérisant la mise à jour des informations de position et modifie les informations de position (Pos0).

8. Procédé selon la revendication 6 ou 7 dans lequel
le numéro d'appel des services (**INSN1,** INSN2) renferme un autre numéro de transaction (FMN) destiné à caractériser le moyen de transport (FM).

9. Procédé selon l'une des revendications 6 à 8 dans lequel,
grâce à un autre numéro de transaction (FMN) dans le numéro d'appel des services (**INSN1**, INSN2), est caractérisé le numéro d'un train utilisé comme moyen de transport (FM).

10. Procédé selon l'une des revendications 6 à 9 dans lequel,
- pour un appel en départ, qui est initié par un poste mobile (MS) se trouvant dans le moyen de transport (FM) et qui est dirigé vers un agent de contrôle ou un dispositif de contrôle définis par une **adresse fonctionnelle**, une liaison d'appel est établie vers le réseau intelligent (IN),
- le centre de contrôle des services (SCP) détermine les informations de position actuelles (Pos...) et met à disposition un numéro d'appel de destination (DesAd) de l'agent de contrôle ou du dispositif de contrôle précisément compétents en fonction de l'emplacement actuel du moyen de transport (FM) et
- la liaison d'appel est commutée vers l'agent de contrôle ou le dispositif de contrôle compétents en fonction du numéro d'appel de destination (DesAd).

11. Procédé selon l'une des revendications 1 à 5 dans lequel,
- pour un appel en arrivée, une liaison d'appel est établie vers le réseau intelligent (IN),
- le centre de contrôle des services (SCP) détermine les informations de position actuelles de plusieurs moyens de transport et met à disposition un numéro d'appel de destination d'un poste mobile se trouvant dans un moyen de transport qui est le plus proche en fonction de l'emplacement actuel de l'abonné appelant et
- la liaison d'appel est commutée vers le poste mobile en fonction du numéro d'appel de destination.

12. Système de communication destiné à la mise à jour en temps réel d'informations relatives aux services d'un réseau intelligent (IN) comportant
- au moins un centre de contrôle des services (SCP) et un central de commutation des services (SSP), lesquels peuvent émettre et recevoir des messages conformes à un protocole du réseau et
- au moins une interface pour la communication avec un dispositif externe par l'intermédiaire d'un protocole d'interfaces,
avec
- un système de contrôle et de commande (ECS) qui peut, dès qu'il détecte en temps réel une modification des informations relatives aux services, sélectionner un numéro d'appel des services (INSN2) renfermant au moins un numéro des services (IND) destiné à caractériser un service et, avec le numéro des services (IND), provoquer l'établissement d'une liaison de communication vers le réseau intelligent (IN), le numéro d'appel des services (INSN2) comprenant également un numéro de transaction (TRN2) destiné à caractériser une transaction déclenchant la mise à jour des informations relatives aux services,
**caractérisé par**
- des moyens (ESE) dans le système de contrôle et de commande (ECS), qui envoient le numéro d'appel des services (INSN2) dans un message (SUP) du protocole d'interface, et des moyens (SSP) dans le réseau intelligent (IN), qui envoient, dans un message (IDP) du protocole du réseau, le numéro d'appel des services (INSN2) reçu au centre de contrôle des services (SCP),
- des moyens (SE) dans le centre de contrôle des services (SCP), qui analysent un numéro de transaction (TRN2) reçu et remplacent les informations relatives aux services existantes par de nouvelles informations relatives aux services et libèrent la liaison de communication après l'exécution de la transaction et envoient une information (ok) relative à la libération dans un message (RLC) du protocole du réseau et avec
- des moyens (SSP) dans le réseau intelligent (IN), qui envoient l'information reçue dans un message (REL) du protocole d'interfaces, au système de contrôle et de commande (ECS).
